# EUROPEAN PATENT SPECIFICATION

(11) **EP 3 851 808 B1**
(45) Date of publication and mention of the grant of the patent: **02.08.2023**
(21) Application number: 21151106.8
(22) Date of filing: 12.01.2021
(51) Int. Cl.: G01D 21/00, H04W 4/38, B61K 9/00

(54) **SENSING SYSTEM AND SENSING CONTROL METHOD**
ABTASTSYSTEM UND ABTASTSTEUERVERFAHREN
SYSTÈME DE DÉTECTION ET PROCÉDÉ DE COMMANDE DE DÉTECTION

(30) Priority: 17.01.2020 JP 2020006356
(43) Date of publication of application: 21.07.2021
(73) Proprietor: Hitachi, Ltd., Tokyo 100-8280 (JP)
(72) Inventor: FUJIMORI, Tsukasa, Tokyo, 100-8280 (JP); MORISHITA, Masatoshi, Tokyo, 100-8280 (JP)
(74) Representative: MERH-IP Matias Erny Reichl Hoffmann Patentanwälte PartG mbB

(56) References cited:
- EP-A1- 2 922 033
- EP-A1- 3 025 926
- WO-A1-2015/081278
- WO-A1-2020/014683
- US-A1- 2014 156 123
- US-A1- 2017 199 101
- US-A1- 2019 250 069

## Description

### BACKGROUND OF THE INVENTION

### 1. Field of the Invention

The present invention generally relates to sensing technology.

### 2. Description of the Related Art

This type of sensing technology includes a technique disclosed in US 2019/0005807 which is a previous application of the applicant of the present application. According to the technique disclosed in US 2019/0005807, it is possible to reduce power consumption in a wireless sensor node in a case of using a sensor that needs to perform a plurality of times of measurement in a relatively short period of time.

The wireless sensor node is configured to perform measurement based on a parameter value group that is one or more parameter values affecting the measurement. The wireless sensor node measures a value of a predetermined measurement item belonging to a surrounding environment of the wireless sensor node. A parameter value group of the wireless sensor node is preferably optimal in the surrounding environment of the wireless sensor node.

It is considered that the wireless sensor node is used to measure a surrounding environment of a train. Since a huge number of wireless sensor nodes are required if the wireless sensor nodes are installed along a line, it is considered to install the wireless sensor node on the train.

However, a surrounding environment of the wireless sensor node changes with a movement of the train. For example, the train may enter or exit a closed system (for example, a tunnel). When a parameter value group of the wireless sensor node is constant, optimal measurement is not always performed. US 2017/199101 A1 discloses a railway condition monitoring sensor device attached to a railway bearing of a railway vehicle including at least one vibration sensor; means for detecting movement of the railway vehicle; a control unit for processing at least the signals obtained by the vibration sensor to determine a health parameter indicating the bearings state of health. WO 2015/081278 A1 shows a rail yard management system and method that takes advantage of infrastructure installed in rail yards and on train consists to allow the management of the assembly, disassembly and validation of train consists in the rail yard. WO 2020/014683 A1 relates to systems and methods for implementing one or more autonomous features for autonomous and semi-autonomous control of one or more vehicles . EP 2 922 033 A1 discloses a vehicle sensor diagnosis system comprising one or more sensors arranged to monitor a host vehicle surrounding during drive along a host vehicle route and one or more processing units connected to a database, the vehicle sensor diagnosis system being connected to a host vehicle positioning arrangement, arranged to determine a host vehicle position and driving direction. US 2019/250069 A1 A refers to a system and method for monitoring the operating condition of a wheelset on a railcar comprising a sealed unit mounted on or near a wheelset of the railcar for collecting data from the wheelset and performing AI analyses on the collected data to determine the operational condition and predict failure modes for the wheelset. EP 3 025 926 A1 shows a condition monitoring system for bearing units for vehicles, the system comprising at least one condition monitoring unit for measuring at least one operating parameter of one bearing unit and a control unit for receiving and processing signals obtained from the condition monitoring unit. US 2014/156123 A1 discloses an inspection system for use with a rail vehicle which includes a database containing vehicle route data and at least one location of track to be inspected. SUMMARY OF THE

### INVENTION

The aforementioned object is solved by the invention according to the independent claims. Further preferred developments are described by the dependent claims. In particular, a sensing system includes one or a plurality of wireless sensor nodes and a sensing control device. Each wireless sensor node performs measurement based on a parameter value group that is one or a plurality of parameter values affecting the measurement and is installed on a train. The sensing control device specifies a position of the train, determines, for at least one wireless sensor node, a parameter value group of the wireless sensor node corresponding to the specified position of the train, and performs control to set the determined parameter value group in the wireless sensor node.

Even when the surrounding environment of the wireless sensor node changes with a movement of the train, optimal measurement by the wireless sensor node can be maintained.

### BRIEF DESCRIPTION OF THE DRAWINGS

FIG. 1 shows an overall configuration of a system according to an embodiment.
FIG. 2 shows wireless sensor nodes provided in a sensor group.
FIG. 3 shows a configuration of the wireless sensor node and a sensing control device.
FIG. 4 shows a configuration of a parameter item table.
FIG. 5 shows a configuration of an operation management table.
FIG. 6 shows a processing flow in a preparation phase.
FIG. 7 shows a processing flow in an operation phase.
FIG. 8 shows an example of an outline of a learning processing.
FIG. 9 shows control of a power supply of the wireless sensor node that performs measurement related to a facility configuration space.

### DESCRIPTION OF THE PREFERRED EMBODIMENTS

In the following description, a "communication interface device" may be one or more communication interface devices. The one or more communication interface devices may be one or more communication interface devices of the same type (for example, may be one or more network interface card (NIC)), or two or more communication interface devices of different types (for example, an NIC and a host bus adapter (HBA)).

In the following description, a "memory" may be one or more memory devices which is an example of one or more storage devices, and typically may be a main storage device. At least one memory device in the memory may be a volatile memory device or a non-volatile memory device.

In the following description, a "persistent storage device" may be one or more persistent storage devices which are each an example of one or more storage devices. Typically, the persistent storage device may be a non-volatile storage device (for example, an auxiliary storage device). Specific examples of the persistent storage device include a hard disk drive (HDD), a solid state drive (SSD), a non-volatile memory express (NVMe) drive, and a storage class memory (SCM).

In the following description, a "storage device" may be either the "memory" or the "persistent storage device".

In the following description, a "processor" may be one or more processor devices. Typically, at least one processor device is a microprocessor device such as a central processing unit (CPU). Alternatively, the processor device may be another type of processor device such as a graphics processing unit (GPU) . The at least one processor device may be a single core or a multi-core. The at least one processor device may be a processor core. The at least one processor device may be a processor device in a broad sense such as a circuit (for example, a field-programmable gate array (FPGA), a complex programmable logic device (CPLD), and an application specific integrated circuit (ASIC)) that is an aggregation of gate arrays by a hardware description language that executes a part of or all processings.

In the following description, an expression such as "xxx table" may be used to describe information that is acquired as an output for an input. The information may be data of any structure (for example, may be structured data or may be unstructured data), or may be a learning model represented by a neural network, a genetic algorithm, or a random forest that generates an output for an input. Therefore, the "xxx table" can be referred to as "xxx information". In the following description, a configuration of each table is an example, one table may be divided into two or more tables, and all or a part of the two or more tables may be one table.

In the following description, an expression of "xxx unit" may be used to describe a function. The function may be implemented by a processor executing one or more computer programs, or may be implemented by one or more hardware circuits (for example, an FPGA or an ASIC), or may be implemented by a combination of the above implementation methods. When a function is implemented by a processor executing a program, a predetermined processing is executed by appropriately using a storage device and/or an interface device, so that the function may be at least a part of the processor. A processing described using the function as a subject may be a processing executed by a processor or by a device including the processor. The program may be installed from a program source . The program source may be, for example, a recording medium (for example, a non-transitory recording medium) that can be read by a program distribution computer or a computer. Description for each function is an example, a plurality of functions may be combined into one function, or one function may be divided into a plurality of functions.

In the following description, among reference numerals, a common reference numeral may be used when elements of the same type are described without distinction, and different reference numerals may be used when elements of the same type are distinguished.

In the following description, a "parameter" includes a parameter item (for example, an amplification factor) and a parameter value (for example, a value of an amplification factor).

In the following description, for a wireless sensor node, a "measurement data set" is a data set indicating one or more values measured according to a parameter value group set in the wireless sensor node and the respective measurement time points of the one or more values. For each parameter value group set in the wireless sensor node, a "measurement data set group" is one or more measurement data sets corresponding to the parameter value group. A "data set" is one logical block of electronic data as viewed from a program such as an application program, and may be any one of a record, a file, a key value pair, a tuple, and the like.

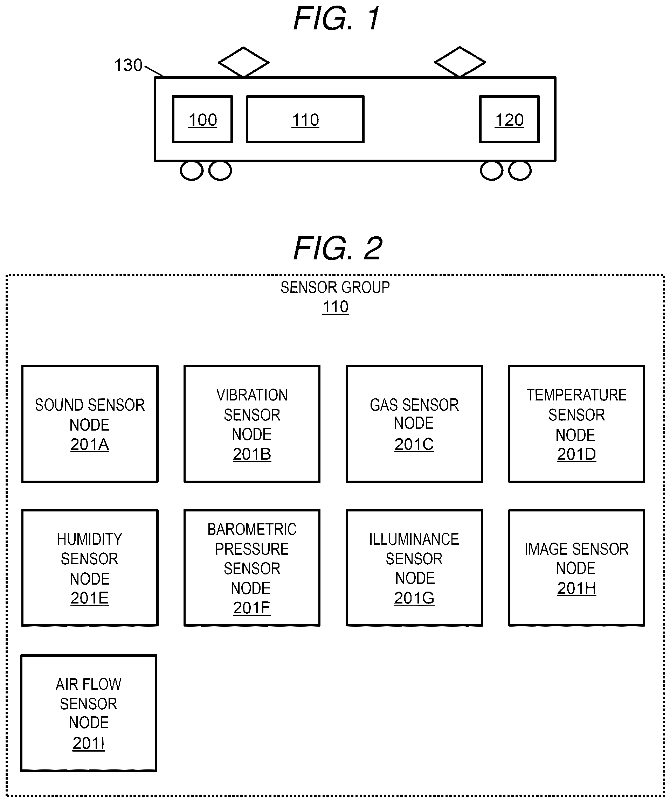

FIG. 1 shows an overall configuration of a system according to an embodiment.

A train 130 includes an operation control device 100 (for example, a device that is provided in an operation room of the train 130 and controls an operation of the train 130), a sensor group 110 that is one or a plurality of wireless sensor nodes, and a sensing control device 120 that controls measurement by each of the wireless sensor nodes. The sensing control device 120 may be provided in the train 130 as shown in FIG. 1, or may be a device provided outside the train 130 and common to a plurality of trains 130. The sensing control device 120 may be provided in the operation control device 100 (in other words, the operation control device 100 may perform sensing control in addition to operation control) . The train 130 includes one or more railway vehicles.

FIG. 2 shows the wireless sensor nodes provided in the sensor group 110.

As described above, the sensor group 110 includes the one or the plurality of wireless sensor nodes 201. For example, the sensor group 110 includes a sound sensor node 201A (a wireless sensor node including a sound sensor), a vibration sensor node 201B (a wireless sensor node including a vibration sensor), a gas sensor node 201C (a wireless sensor node including a gas sensor), a temperature sensor node 201D (a wireless sensor node including a temperature sensor), a humidity sensor node 201E (a wireless sensor node including a humidity sensor), a barometric pressure sensor node 201F (a wireless sensor node including a barometric pressure sensor), an illuminance sensor node 201G (a wireless sensor node including an illuminance sensor), an image sensor node 201H (a wireless sensor node including an image sensor), and an air flow sensor node 2011 (a wireless sensor node including an air flow sensor) . The image sensor node 201H may be, for example, a camera that takes a still image or a dynamic image. Each of the wireless sensor nodes 201 is installed on the train 130 at a position suitable for measurement by the corresponding wireless sensor node. Among the wireless sensor nodes 201, a part of the wireless sensor nodes 201 may be omitted, or a part of the wireless sensor nodes 201 may be other wireless sensor nodes 201. At least one of the wireless sensor nodes 201 may be installed in two or more.

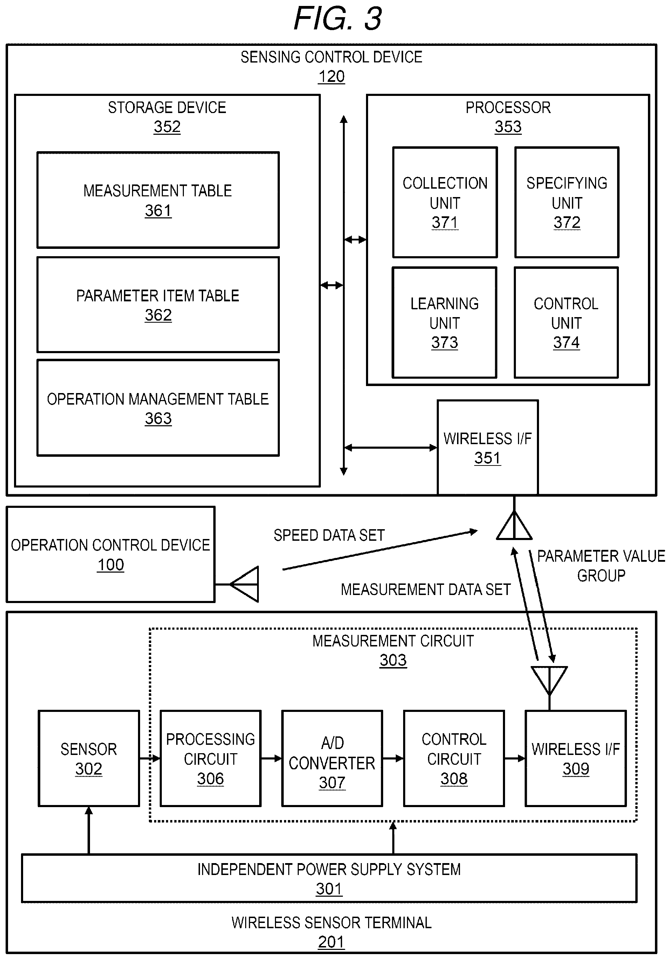

FIG. 3 shows a configuration of the wireless sensor node 201 and the sensing control device 120. A configuration of the wireless sensor node 201 shown in FIG. 3 can be applied to any one of the wireless sensor nodes 201 in the sensor group 110.

The wireless sensor node 201 is a terminal that includes an independent power supply system 301, and implements a sensor function by operating a sensor 302 and a measurement circuit 303 with generated electric power of the independent power supply system 301. The sensor function includes measurement of various surrounding physical quantities and wirelessly transmission of a measurement data set indicating measured results to the sensing control device 120. Here, "measurement" refers to an entire processing of preparing the measurement data set to be transmitted for one time by the wireless sensor node 201. For example, when the wireless sensor node 201 shown in FIG. 3 is the vibration sensor node 201B, the sensor 302 is a vibration sensor. The vibration sensor measures surrounding vibrations, and a measurement data set indicating measured vibration values is wirelessly transmitted. Alternatively, a sensing system may include one sensing control device 120 and the plurality of wireless sensor nodes 201. Hereinafter, for the sake of easy description, one wireless sensor node 201 will be described as an example, but each of the plurality of wireless sensor nodes 201 can be operated in the same manner.

In most cases, it is difficult for the wireless sensor node 201 to secure a line for supplying power. Therefore, the independent power supply system 301 may include a power generation element such as a solar cell, a piezo element, and a Peltier element, a power supply and storage element such as a battery, a power supply control circuit, a rectifier circuit, and the like. The independent power supply system 301 can supply electric power to the sensor 302 and the measurement circuit 303 without being supplied with electric power from outside of the wireless sensor node 201.

The measurement circuit 303 performs a shaping processing on an output signal of the sensor 302, thereafter converts the output signal into a digital value, and wirelessly transmits a data set including the digital value serving as a measurement data set to the sensing control device 120. The measurement circuit 303 includes a processing circuit 306, an analog-to-digital converter (ADC) 307, a control circuit 308, and a wireless communication interface device (wireless I/F) 309.

The processing circuit 306 may include, for example, at least one of a band-pass filter circuit, an amplitude value detection circuit, an integration circuit, and an amplification circuit.

The band-pass filter circuit may be configured such that a pass-band is variable according to a control signal from the control circuit 308. For example, the band-pass filter circuit may include a plurality of band-pass filters having different pass-bands, and may switch to a band-pass filter to be used according to the control signal from the control circuit 308. The band-pass filter circuit may output an input from the sensor 302 as it is without filtering under the control of the control circuit 308.

The amplitude value detection circuit may be a circuit that outputs a voltage in proportion to an amplitude value of a signal output from the band-pass filter circuit. The amplitude value detection circuit may include a signal level detection circuit, a rectifier circuit, a maximum value circuit, and the like. Further, the amplitude value detection circuit may output an input from the band-pass filter circuit as it is without detecting the amplitude value under the control of the control circuit 308. Alternatively, the amplitude value detection circuit may be omitted.

The integration circuit may be a circuit that integrates input signals from the amplitude value detection circuit for a certain period of time and outputs a voltage value in proportion to an integrated value. The integration circuit may control a period of time during which the input signals are to be integrated and reset the integrated value according to the control signal from the control circuit 308. Further, the integration circuit may output an input from the amplitude value detection circuit as it is without integration under the control of the control circuit 308. Alternatively, the integration circuit may be omitted.

The ADC 307 is a circuit that converts an input signal from the processing circuit 306 (for example, the integration circuit) into a digital signal. The processing circuit 306 may include an amplification circuit provided between the integration circuit and the ADC 307. The amplification circuit may amplify an analog signal.

The control circuit 308 includes a CPU and a memory, generates and outputs a measurement data set to be transmitted to the sensing control device 120 via the wireless I/F 309, and receives a signal from the sensing control device 120. The control circuit 308 controls an operation of each block of the sensor 302 and the measurement circuit 303 based on the received signal.

The wireless I/F 309 is a circuit that wirelessly transmits a signal from the control circuit 308 and receives a wireless signal from the sensing control device 120. The wireless I/F 309 is not particularly limited to a wireless frequency or a wireless system. For example, a wireless system generally used in a sensing system may be a wireless system conforming to a standard such as Wi-SUN (registered trademark), Zigbee (registered trademark), Wi-Fi (registered trademark), and WirelessHART (registered trademark). Alternatively, communication may be performed by a unique protocol.

The sensing control device 120 may be a general-purpose computer or a dedicated machine. The sensing control device 120 includes a wireless I/F 351, a storage device 352, and a processor 353 connected to the wireless I/F 351 and the storage device 352.

The wireless I/F 351 is an example of the communication interface device. The communication interface device may include other types of communication interface devices in addition to the wireless I/F 351. The wireless I/F 351 receives a measurement data set from the wireless sensor node 201 and transmits a parameter value group to the wireless sensor node 201. The wireless I/F 351 periodically or non-periodically receives a speed data set from the operation control device 100. The speed data set is a data set indicating a speed of the train 130 and a time point when the speed is measured.

The storage device 352 stores one or more programs to be executed by the processor 353. The storage device 352 stores a measurement table 361, a parameter item table 362, and an operation management table 363.

The measurement table 361 is a table including one or more measurement data set groups for each wireless sensor node 201. The measurement table 361 includes, for each wireless sensor nodes 201, a measurement data set group for each parameter value group of the corresponding wireless sensor node.

The parameter item table 362 is a table indicating a relationship between the wireless sensor node 201 and a parameter item group (one or more parameter items).

The operation management table 363 is a table indicating a relationship between a position and the speed of the train 130 and the parameter value group.

The processor 353 executes one or more programs stored in the storage device 352, thereby implementing a collection unit 371, a specifying unit 372, a learning unit 373, and a control unit 374 in the processor 353.

The collection unit 371 collects a measurement data set from the wireless sensor node 201 and stores the collected measurement data set in the storage device 352. The collection unit 371 collects a speed data set from the operation control device 100 and stores the collected speed data set in the storage device 352.

The specifying unit 372 specifies a position of the train 130 based on the operation management table 363. The specifying unit 372 specifies the speed of the train 130 based on the speed data set.

The learning unit 373 performs a learning processing that is a process of learning a relationship between the position and the speed of the train and an optimal parameter value group.

The control unit 374 performs control (for example, transmitting the parameter value group to the wireless sensor node 201) to set an optimal parameter value group for the position and the speed specified by the specifying unit 372 in the wireless sensor node 201.

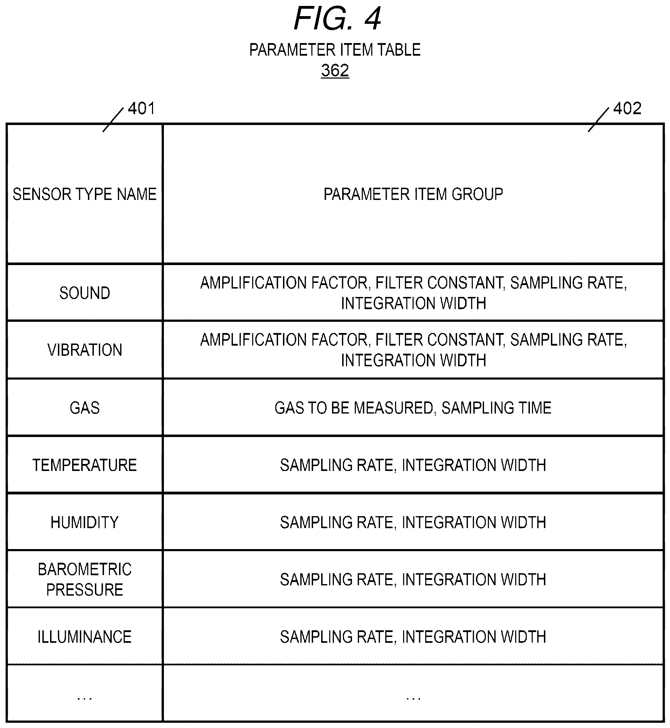

FIG. 4 shows a configuration of the parameter item table 362.

The parameter item table 362 includes a record for each type of the wireless sensor nodes 201. Each record stores information such as a sensor type name 401 and a parameter item group 402. One sensor type will be described as an example ("a target sensor type" in FIG. 4).

The sensor type name 401 indicates a name of the target sensor type.

The parameter item group 402 is one or a plurality of parameter items respectively corresponding to one or a plurality of parameter values required in the wireless sensor nodes 201 belonging to the target sensor type. According to an example shown in FIG. 4, the parameter value group set in the gas sensor node 201C includes a value indicating a gas to be measured (for example, a heater temperature) and a value indicating a sampling period of time (a sampling period).

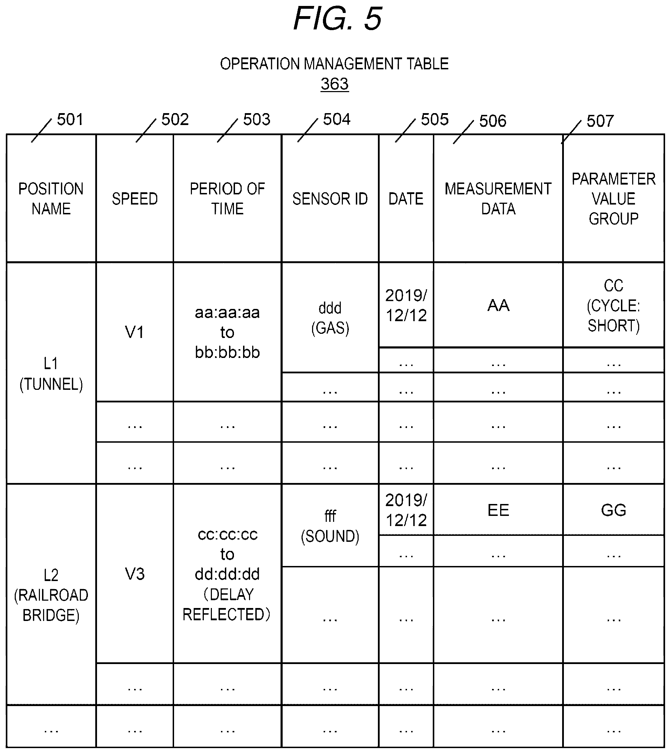

FIG. 5 shows a configuration of the operation management table 363.

The operation management table 363 includes a record for each position/speed of the train 130. The "position/speed" refers to a set of a position and a speed. Each record stores information such as a position name 501, a speed 502, a period of time 503, a sensor ID 504, a date 505, measurement data 506, and a parameter value group 507. One position/speed will be described as an example ("a target position/speed" in FIG. 5) .

The position name 501 indicates a name of a position in the target position/speed. Here, the "position" is a position in a facility (for example, a structure) where the train 130 passes or stops. Types of the "facility" can be roughly classified into a space structure facility that forms a space through which the train 130 passes or stops, and a non-space structure facility that does not form such a space. Examples of the space structure facility include a tunnel (for example, a mountain tunnel or an underground tunnel), and an underground station platform. An example of the non-space structure facility includes a railroad bridge. For example, a line may be divided into a plurality of sections having different surrounding environments, and each section may correspond to a position.

The speed 502 indicates a speed of the target position/speed. The speed 502 may be a speed specified from a speed data set, or may be a pre-registered scheduled speed.

The period of time 503 indicates a time point range corresponding to the target position/speed. A "time point" is described in unit of second, minute, hour, day, month, and year. Alternatively, a unit of the time point may be rougher or finer, or may be a different unit.

The sensor ID 504 indicates an ID of the wireless sensor node 201 that performs measurement at the target position/speed. The date 505 indicates a date when the wireless sensor node 201 performs measurement at the target position/speed. The measurement data 506 is data including one or more values measured by the wireless sensor node 201 at the target position/speed, and is, for example, one or more measurement data sets. The parameter value group 507 is a parameter value group determined for the target position/speed in the wireless sensor node 201.

In the present embodiment, there is a preparation phase and an operation phase. The preparation phase is a phase in which an optimal parameter value group for each position/speed is learned for each wireless sensor node 201. The operation phase is a phase in which an optimal parameter value group for a changed position/speed is set in the wireless sensor node 201 each time a position/speed of the train 130 changes. The parameter value group set in the operation phase is a parameter value group learned in the preparation phase or a parameter value group that is re-learned in the operation phase.

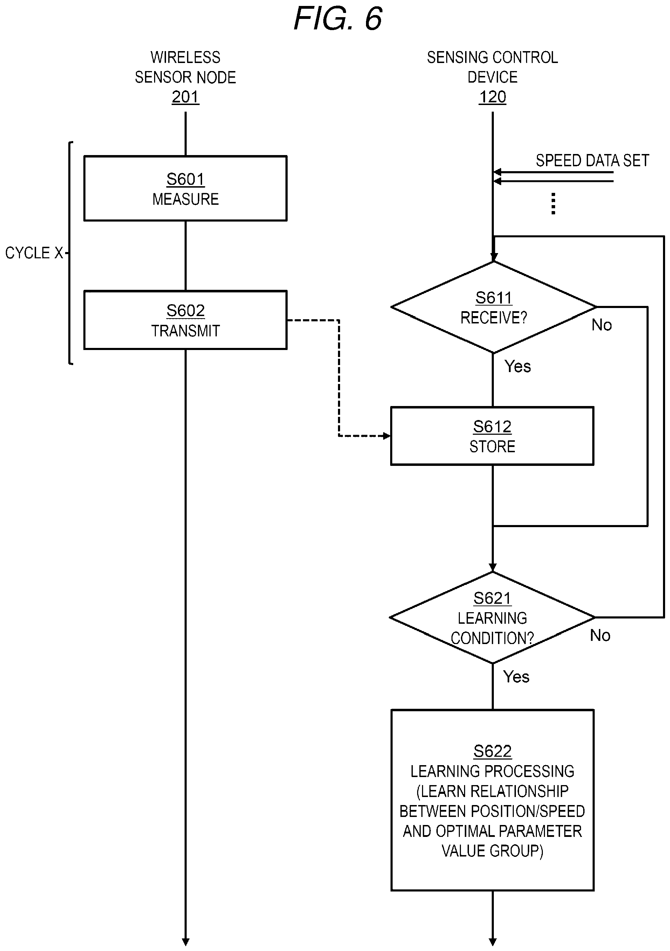

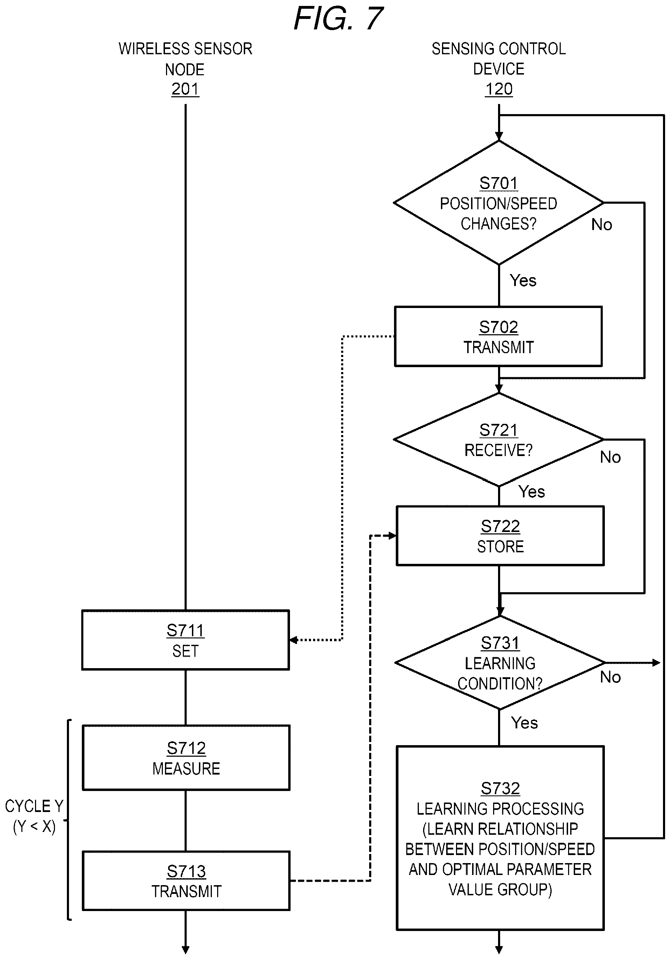

Hereinafter, a processing in each of the preparation phase and the operation phase will be described with reference to FIGS. 6 and 7. One wireless sensor node 201 will be described as an example in description with reference to FIGS. 6 and 7. FIG. 6 shows a processing flow in the preparation phase. In an initial state (an initial mode), the wireless sensor node 201 acquires multiple points in one time measurement in an initial parameter value group (for example, a default parameter value group with which a vibration spectrum analysis can be performed) (S601). The wireless sensor node 201 stores a measurement data set including measured values in a memory of the control circuit 308, and transmits the measurement data set to the sensing control device 120 (S602). When the collection unit 371 of the sensing control device 120 receives the measurement data set (S611: Yes), the measurement data set is stored in the measurement table 361 (S612).

S601 and S602 are performed at a predetermined cycle X (for example, once per hour) . For example, when the collection unit 371 of the sensing control device 120 issues a query to the wireless sensor node 201 at the cycle X, S601 and S602 may be performed by the wireless sensor node 201. For example, the collection unit 371 periodically (or non-periodically) receives a speed data set from the operation control device 100, specifies the period of time 503 to which a time point indicated by the speed data set belongs from the operation management table 363, and records the speed indicated by the speed data set in the operation management table 363 as the speed 502 corresponding to the period of time 503.

The learning unit 373 determines whether a learning condition (a condition for performing a learning processing) is satisfied (S621). The learning condition may be, for example, a condition in which a measurement data set group at a predetermined amount or a predetermined period (for example, one day) is accumulated in at least one wireless sensor node 201. When a determination result in S621 is false (S621 : No), the collection unit 371 continues to collect a measurement data set.

When the determination result in S621 is true (S621: Yes), the learning unit 373 performs a learning processing (S622) . In the learning processing, for example, the specifying unit 372 specifies a relationship of [position/speed/period of time] between the position/speed and the period of time based on the operation management table 363. Based on the specified relationship of [position/speed/period of time], the learning unit 373 determines an optimal parameter value group for the corresponding position/speed for one or more specified positions/ speeds of the train by analyzing one or more measurement data set groups of one or more wireless sensor nodes 201 including the corresponding wireless sensor node 201. The control unit 374 registers the determined optimal parameter value group for each position/speed of the corresponding wireless sensor node 201 in the operation management table 363 as the parameter value group 507. One or a plurality of parameter items of one or a plurality of parameter values constituting the optimal parameter value group are specified from the parameter item table 362 using, for example, a sensor type name specified from the sensor ID 504 (for example, an ID including a sensor type name) corresponding to position/speed/period of time (a set of a position, a speed, and a period of time) as a key.

FIG. 7 shows a processing flow in the operation phase.

The specifying unit 372 of the sensing control device 120 determines whether the position/speed of the train 130 changes with reference to the operation management table 363 (S701) . "A change in the position" may correspond to at least one of, for example, a case in which the train 130 exits a facility (facility indicated by the position name 501) in which the train 130 is present and a case in which the train 130 enters a facility in which the train 130 is not present. "A change in the speed" may refer to that, for example, the speed 502 close to a latest speed of the train 130 is shifted to another speed 502.

When a determination result in S701 is true (S701: Yes), the control unit 374 specifies an optimal parameter value group corresponding to the changed position/speed from the operation management table 363 for the corresponding wireless sensor node 201, and transmits, to the wireless sensor node 201, a measurement instruction that is an instruction for performing measurement according to the optimal parameter value group including the specified optimal parameter value group (S702) . The wireless sensor node 201 receives the measurement instruction from the sensing control device 120, and sets the optimal parameter value group included in the measurement instruction (S711). The wireless sensor node 201 performs measurement according to the set optimal parameter value group (S712), and transmits a measurement data set indicating measured values to the sensing control device 120 (S713) . When the collection unit 371 of the sensing control device 120 receives the measurement data set (S721 : Yes), the measurement data set is stored in the operation management table 363 (specifically, the measurement data set is stored in the measurement data 506 corresponding to the changed position/speed.) (S722).

The number of samples and a data volume in the measurement according to the optimal parameter value group are smaller than those in the measurement according to the initial parameter value group. That is, in steps S712 and S713, data limited to the initial state is transmitted once. Therefore, measurement can be performed in a relatively high frequency even in view of average power consumption that can be achieved by the independent power supply system 301. In other words, a cycle Y of the measurement according to the optimal parameter value group can be made shorter than the above-described cycle X, that is, the measurement according to the optimal parameter value group can be performed at a higher frequency (for example, a frequency of once per minute) than the measurement according to the initial parameter value group.

The learning unit 373 determines whether the learning condition is satisfied (S731). When a determination result in S731 is true (S731: Yes), the learning unit 373 performs the learning processing (S732).

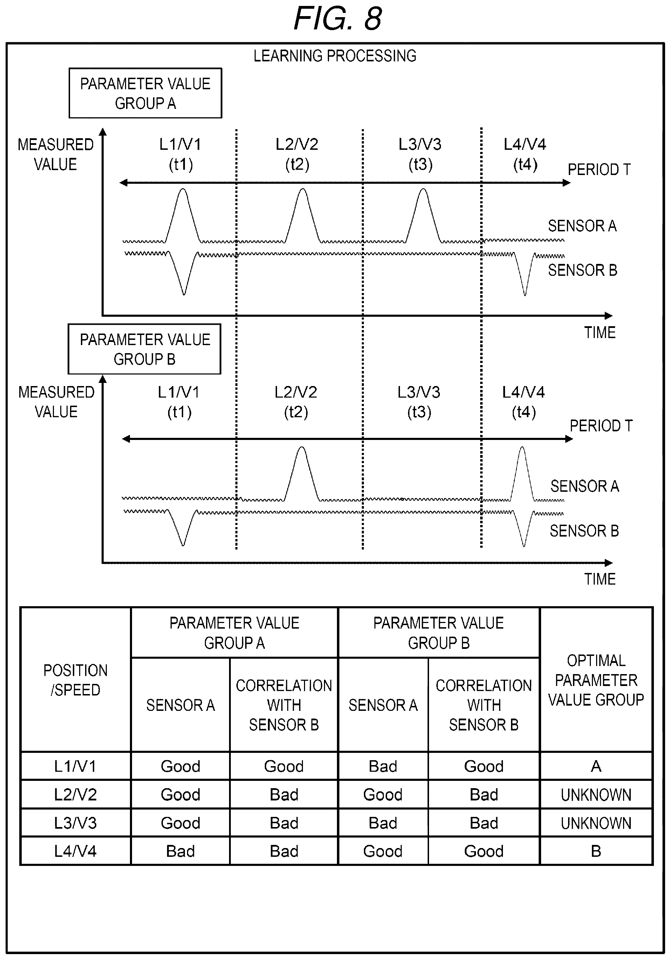

A method for determining a parameter value group in the learning processing may be a method shown in FIGS. 3A and 3B in US 2019/0005807, or may be a method shown in FIG. 8.

The learning processing according to the method shown in FIG. 8 is a processing of learning a parameter value group for each position/speed of a sensor A (a first wireless sensor node 201). A learning condition for the sensor A is as follows .
· In each of parameter value groups A and B (an example of two or more parameter value groups), a measurement data set group of the sensor A for a period T (for example, one day from a certain time point) is obtained.
· In each of the parameter value groups A and B, a measurement data set group of a sensor B for the period T is obtained.

Based on the operation management table 363, the specifying unit 372 specifies a relationship of [position/speed/period of time] that is a relationship between a position/speed and a period of time. According to the example shown in FIG. 8, the specified relationship of [position/speed/period of time] is as follows.
· A position/speed at a first period t1 is L1/V1 (a set of a first position and a first speed).
· A position/speed at a second period t2 is L2/V2 (a set of a second position and a second speed).
· A position/speed at a third period t3 is L3/V3 (a set of a third position and a third speed).
· A position/speed at a fourth period t4 is L4/V4 (a set of a fourth position and a fourth speed).

The learning unit 373 learns an optimal parameter value group of the sensor A for each of L1/V1, L2/V2, L3/V3, and L4/V4. Specifically, the learning unit 373 checks, for example, the following two items (1) and (2) related to each of the L1/V1, L2/V2, L3/V3, and L4/V4 for each of the parameter value groups A and B.
(1) The learning unit 373 checks whether there is a characteristic change in measurement values of the sensor A.
(2) The learning unit 373 checks whether a correlation with measurement values of the sensor B is high (whether there is a characteristic change in the measurement values of the sensor B).

The learning unit 373 determines, for each of the L1/V1, L2/V2, L3/V3, and L4/V4, a parameter value group in which both the two items (1) and (2) have positive results ("good") as an optimal parameter value group. In the example shown in FIG. 8, for L1/V1, when a parameter value group of the sensor A is the parameter value group A, since both of the items (1) and (2) have positive results, an optimal parameter value group is the parameter value group A. For L4/V4, when a parameter value group of the sensor A is the parameter value group B, since both items (1) and (2) have positive results, an optimal parameter value group is the parameter value group B.

When there is a position/speed for which not all of the two items (1) and (2) for any one of the parameter value groups has positive results (the optimal parameter value group = "unknown"), the learning unit 373 continues to learn an optimal parameter value group for the position/speed.

The method shown in FIG. 8 may be applied to a learning processing in any one of the preparation phase and the operation phase. When the method shown in FIG. 8 is applied to the learning processing in the preparation phase, two or more initial parameter value groups are prepared for a wireless sensor node A. An initial learning processing may be a learning processing of which of one of the two or more initial parameter value groups is optimal for which position/speed.

The embodiment described above can be summarized as follows. The following summary may include description (for example, a modification) not included in the above description.

The sensing control device 120 includes the specifying unit 372 and the control unit 374. The specifying unit 372 specifies a position of the train 130. For at least one wireless sensor node 201 among the one or the plurality of wireless sensor nodes 201, the control unit 374 determines a parameter value group of the wireless sensor node 201 corresponding to the specified position, and performs control to set the determined parameter value group in the wireless sensor node 201.

A surrounding environment of the wireless sensor node 201 installed on the train 130 changes with a movement of the train 130. When the surrounding environment changes, measurement performed according to a set parameter value group is not always optimal. Although a position and a speed are targeted as factors of the surrounding environment of the wireless sensor node 201 in the embodiment described above, the position is particularly targeted in the summary. One or both of a position and a speed may be used as a factor of the surrounding environment. Alternatively, other types of factors in addition to or instead of the one or both of a position and a speed may be used as factors of the surrounding environment. For example, the specifying unit 372 may specify a speed of the train 130 in addition to a position of the train 130, and the control unit 374 may determine, for at least one wireless sensor node 201, the parameter value group of the wireless sensor node 201 corresponding to the specified position and speed of the train 130.

The parameter value group that is set in the wireless sensor node 201 and affects the measurement is an optimal parameter value group for the position of the train 130. Accordingly, even when the surrounding environment of the wireless sensor node 201 changes with the movement of the train 130, optimal measurement by the wireless sensor node 201 can be maintained.

The "control to set the determined parameter value group" may be, for example, any one of the following.
· The control unit 374 transmits an instruction including the determined parameter value group to the wireless sensor node 201. In response to the instruction, the wireless sensor node 201 sets the parameter value group therein and performs measurement according to the set parameter value group.
· The control unit 374 transmits, to the wireless sensor node 201, an instruction to indicate which parameter value group among the plurality of parameter value groups stored in the wireless sensor node 201 is valid. In response to the instruction, the wireless sensor node 201 validates the parameter value group and performs measurement according to the valid parameter value group.

"Specifying the position of the train 130" may refer to specifying any one of a previous position, a current position, and a future position of the train 130. The current position may be specified from, for example, a GPS signal. The previous position or the future position may be specified from management information (information including information indicating a relationship between a period of time and a position) such as the operation management table 363.

Alternatively, "specifying the position of the train 130" may refer to specifying which type of facility among one or more types of facilities the train 130 is positioned at. When the position of the train 130 changes from a first position (a position in a first type of facility (any one type of facility)) to a second position (a position in a second type of facility (any one type of facility other than the first type of facility)) (for example, S701: Yes), the control unit 374 performs control, for each of at least one wireless sensor node 201 among the one or the plurality of wireless sensor nodes 201, to change a parameter value group of the wireless sensor node 201 to a parameter value group corresponding to the second position. In this manner, even when the position of the train 130 changes, optimal measurement can be maintained.

Similar to the "control to set the determined parameter value group", the "control to change to the parameter value group corresponding to the second position" may be, for example, any one of the following.
· The control unit 374 transmits an instruction including a changed parameter value group to the wireless sensor node 201.
· The control unit 374 transmits, to the wireless sensor node 201, an instruction to indicate which parameter value group among the plurality of parameter value groups stored in the wireless sensor node 201 is valid.

The control unit 374 may select one or more wireless sensor nodes 201 according to which type of facility the specified position is at, and may determine, for each of the selected one or more wireless sensor nodes 201, a parameter value group corresponding to the specified position. That is, required sensor types may be different depending on a position (facility). For example, in a space structure facility such as a tunnel, measurement by the gas sensor node 201C is considered to be valid, and at a position other than the space structure facility (for example, outdoors), measurement by the gas sensor node 201C is considered to be unnecessary. Unnecessary measurement is performed, which results in wasteful power in the wireless sensor node 201. Such a problem can be avoided. The selected "one or more wireless sensor nodes 201" are one or more wireless terminals 201 specified from, for example, the operation management table 363. Examples of a position and the wireless sensor node 201 are as follows.
· For a position in the space structure facility (a facility in which the train 130 enters or exits and that forms a space surrounding the train 130), there is at least the gas sensor node 201C (see FIG. 3) . When any kind of gas is generated in the space structure facility, it can be expected that the gas sensor node 201C detects the gas according to an optimal parameter value group (including, for example, a gas to be measured (such as a heater temperature)) set in the gas sensor node 201C.
· For a position on a bridge serving as a facility, there is at least the sound sensor node 201A. Sound is affected when the train 130 passes through the bridge, but it can be expected that sound measurement is maintained to be optimal.

The position of the train 130 may be specified, for example, based on the operation management table 363 including the information indicating the relationship between the period of time and the position of the train 130. The operation management table 363 or operation information (such as diagram information) based on the table 363 is information used for controlling operation of the train 130, and such information may be effectively used for specifying the position of the train 130 so as to perform sensing control. As shown in FIG. 5, when a delay of the train 130 occurs, delay time of the train 130 may be reflected in the period of time 503 indicated in the operation management table 363. In this manner, the sensing control is implemented in consideration of the delay time of the train 130. The collection unit 371 may receive information indicating the delay time of the train 130 from a management center (not shown), and the control unit 374 may reflect the delay time in the period of time 503 by applying the information to the operation management table 363, for example.

The collection unit 371 may collect a measurement data set from each of the one or the plurality of wireless sensor nodes 201. For each of the wireless sensor nodes 201, the learning unit 373 may perform a learning processing of learning the relationship between the position of the train 130 and the optimal parameter value group. For each of the wireless sensor nodes 201, the learning processing may include determining, for each of one or more specified positions of the train 130, the optimal parameter value group for the position by analyzing one or more measurement data set groups of one or more wireless sensor nodes 201 including the wireless sensor node 201 based on the operation management table 363. The relationship between the position of the train 130 and the optimal parameter value group can be maintained by performing such a learning processing.

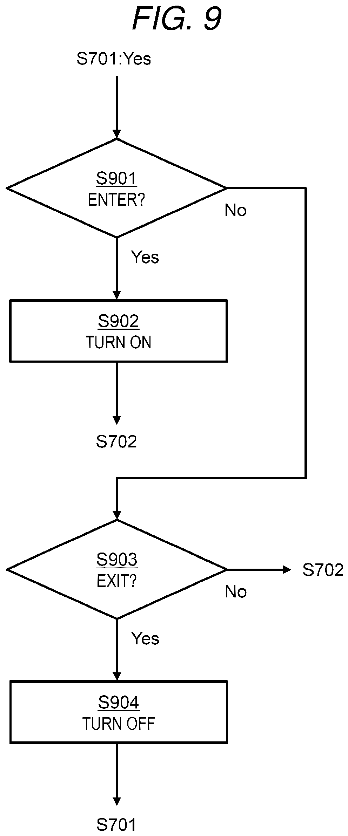

The independent power supply system 301 of the gas sensor node 201C may include a solar cell. As shown in FIG. 9, when the specifying unit 372 specifies that the train 130 enters a position in the space structure facility from a position other than the space structure facility (S901: Yes), the control unit 374 may turn on a power supply of the gas sensor node 201C (S902) . When the specifying unit 372 detects that the train 130 exits from the position in the space structure facility to the position other than the space structure facility (S903: Yes), the control unit 374 may turn off the power supply of the gas sensor node 201C. Accordingly, power consumption of the gas sensor node 201C can be reduced. Therefore, certainty of continuing measurement in the space structure facility by the gas sensor node 201C can be improved.

For example, as shown in FIG. 5, for each of the one or more wireless sensor nodes that perform measurement regardless of whether the position of the train 130 is the position in the space structure facility or the position other than the space structure facility, an optimal sampling period at a position in the space structure facility is longer than an optimal sampling period at a position other than the space structure facility. Since it is difficult to generate electric power in the space structure facility, certainty of continuing measurement in the space structure facility can be improved.

Although one embodiment has been described above, the embodiment is merely an example for describing the invention, and is not intended to limit the scope of the invention to the embodiment. The invention can be implemented in various other forms.

For example, the position of the train 130 may be specified based on at least a part of speed information, positioning information (such as information from a GPS sensor), and other information instead of or in addition to the operation management table 363. The operation management table 363 may be generated based on diagram information of the train 130. For example, a measurement value of the wireless sensor node 201 such as the illuminance sensor node 201G may be used to detect whether the train 130 is in the space structure facility such as the tunnel.

For example, the speed of the train 130 may be specified (estimated) from at least one measurement value of the sound sensor node 201A, the barometric pressure sensor node 201F, and the air flow sensor node 201I, instead of the speed data set from the operation control device 100.

The invention may be applied to a moving object other than the train, such as an automobile (a bus serving as a typical example having operation management information) and an aircraft (utilizing flight management information of the aircraft). Further, the moving object may be a bicycle or a pedestrian by utilizing position information from a GPS sensor instead of or in addition to the operation management information.

## Claims

1. A sensing system comprising:
one or a plurality of wireless sensor nodes (201) installable on a train (130), each wireless sensor node (201) including a sensor (301), a measurement circuit (303) and an independent power supply system (302) and being configured to perform measurements based on a parameter value group that is one or a plurality of parameter values including setting values of the measurement circuit (303) of the one or the plurality of wireless sensor nodes (201); and
a sensing control device (120) configured to specify a position of the train (130), determine, for at least one wireless sensor node (201) among the one or the plurality of wireless sensor nodes (201), a parameter value group (507) of the wireless sensor node (201) corresponding to the specified position, and perform control to set the determined parameter value group in the wireless sensor node (201).

2. The sensing system according to claim 1, wherein
specifying the position of the train (130) is to specify which type of facility among one or more types of facilities the train (130) is positioned at,
when the position of the train (130) changes from a first position that is a position in a first type of facility to a second position that is a position in a second type of facility, the sensing control device (120) is configured to perform control, for each of the at least one wireless sensor node (201) among the one or the plurality of wireless sensor nodes (201), to change a parameter value group of the wireless sensor node (201) to a parameter value group corresponding to the second position,
the first type of facility is any type of facility, and
the second type of facility is any type of facility other than the first type of facility.

3. The sensing system according to claim 1, wherein
the sensing control device (120) is configured to select one or more wireless sensor nodes (201) according to which type of facility the specified position is at, and determine, for each of the selected one or more wireless sensor nodes (201), a parameter value group corresponding to the specified position.

4. The sensing system according to claim 3, wherein
the one or the plurality of wireless sensor nodes (201) include a gas sensor node (201C) that is a wireless sensor node (201) including a gas sensor, and
at a position in a space structure facility in which the train (130) enters or exits and that forms a space surrounding the train (130), the selected one or more wireless sensor nodes (201) include the gas sensor node (201C).

5. The sensing system according to claim 3, wherein
the one or the plurality of wireless sensor nodes (201) include a sound sensor node (201A) that is a wireless sensor node (201) including a sound sensor, and
at a position on a bridge serving as a facility, the selected one or more wireless sensor nodes (201) include the sound sensor node (201A).

6. The sensing system according to claim 1, wherein
the sensing control device (120) is configured to specify the position of the train (130) based on operation management information including information indicating a relationship between a period of time and the position of the train (130).

7. The sensing system according to claim 6, wherein
when a delay of the train (130) occurs, delay time of the train (130) is reflected in a period of time indicated by the operation management information.

8. The sensing system according to claim 6, wherein
the sensing control device (120) is configured to collect a measurement data set from each of the one or the plurality of wireless sensor nodes (201),
the sensing control device (120) is configured to perform a learning processing of learning a relationship between the position of the train (130) and an optimal parameter value group (507) for each of the one or the plurality of wireless sensor nodes (201),
for each of the one or the plurality of wireless sensor nodes (201), the learning processing includes determining, for each of one or more specified positions of the train (130), an optimal parameter value group (507) at the corresponding position by analyzing one or more measurement data set groups of one or more wireless sensor nodes (201) including the corresponding wireless sensor node (201) based on the operation management information (363), and
for each of the one or the plurality of wireless sensor nodes (201),
the measurement data set is a data set indicating one or more values measured according to the parameter value group set in the corresponding wireless sensor node (201) and a measurement time point of each of the one or more values, and
for each parameter value group set in the corresponding wireless sensor node (201), the measurement data set group is one or a plurality of measurement data sets corresponding to the parameter value group.

9. The sensing system according to claim 8, wherein
specifying a position of the train (130) is to specify which type of facility among one or more types of facilities the train (130) is positioned at.

10. The sensing system according to claim 9, wherein
the one or the plurality of wireless sensor nodes (201) include a gas sensor node (201C) that is a wireless sensor node (201) including a gas sensor, and
the sensing control device (120) is configured to determine, for the gas sensor node (201C), an optimal parameter value group at a position in a space structure facility in which the train (130) enters or exists and that forms a space surrounding the train (130).

11. The sensing system according to claim 10, wherein
the gas sensor node (201C) is a wireless sensor node (201) including an independent power supply system (301) having a solar cell, and
the sensing control device (120) is configured to
turn on a power supply of the gas sensor node (201C) when the position of the train (130) changes from a position other than the space structure facility to a position in the space structure facility, and
turn off the power supply of the gas sensor node (201C) when the position of the train (130) changes from a position in the space structure facility to a position other than the space structure facility.

12. The sensing system according to claim 10, wherein
for each of at least one wireless sensor node (201), among the one or the plurality of wireless sensor nodes (201), that performs measurement regardless of whether the position of the train (130) is a position in the space structure facility or a position other than the space structure facility, an optimal sampling period at the position in the space structure facility is longer than an optimal sampling period at the position other than the space structure facility.

13. The sensing system according to claim 1, wherein
the sensing control device (120) is configured to specify a speed of the train (130) in addition to the position of the train (130), and determine, for the at least one wireless sensor node (201), a parameter value group of the wireless sensor node (201) corresponding to the specified position and speed of the train.

14. A sensing control method comprising:
specifying a position of a train (130);
determining, for at least one wireless sensor node (201) among one or a plurality of wireless sensor nodes (201) installable on the train (130), each wireless sensor node (201) including a sensor (301), a measurement circuit (303) and an independent power supply system (302), and being configured to perform measurements based on a parameter value group being one or a plurality of parameter values including setting values of the measurement circuit (303) of the at least one wireless sensor node (201), a parameter value group of the wireless sensor node (201) corresponding to the specified position, and
performing control to set the determined parameter value group in the wireless sensor node (507).

## Patentansprüche

1. Erfassungssystem, das Folgendes umfasst:
einen oder mehrere Drahtlossensorknoten (201), die an einem Zug (130) installierbar sind, wobei jeder Drahtlossensorknoten (201) einen Sensor (301), eine Messungsschaltung (303) und ein unabhängiges Stromversorgungssystem (302) enthält und konfiguriert ist, Messungen auf der Grundlage einer Parameterwertgruppe durchzuführen, die einen oder mehrere Parameterwerte enthält, die Einstellungswerte der Messungsschaltung (303) des einen oder der mehreren Drahtlossensorknoten (201) umfassen; und
eine Erfassungssteuereinrichtung (120), die konfiguriert ist, eine Position des Zugs (130) zu spezifizieren, für mindestens einen Drahtlossensorknoten (201) unter dem einen oder den mehreren Drahtlossensorknoten (201) eine Parameterwertgruppe (507) des Drahtlossensorknotens (201), der der spezifizierten Position entspricht, zu bestimmen und eine Steuerung durchzuführen, um die bestimmte Parameterwertgruppe im Drahtlossensorknoten (201) zu setzen.

2. Erfassungssystem nach Anspruch 1, wobei
das Spezifizieren der Position des Zugs (130) ausgelegt ist, zu spezifizieren, bei welchem Anlagentyp unter einem oder mehreren Anlagentypen der Zug (130) positioniert ist,
die Erfassungssteuereinrichtung (120) konfiguriert ist, dann, wenn die Position des Zugs (130) sich von einer ersten Position, die eine Position in einem ersten Anlagentyp ist, zu einer zweiten Position, die eine Position in einem zweiten Anlagentyp ist, ändert, für jeden des mindestens einen Drahtlossensorknotens (201) unter dem einen oder den mehreren Drahtlossensorknoten (201) eine Steuerung durchzuführen, um eine Parameterwertgruppe des Drahtlossensorknotens (201) zu einer Parameterwertgruppe zu ändern, die der zweiten Position entspricht,
der erste Anlagentyp ein beliebiger Anlagentyp ist und
der zweite Anlagentyp ein beliebiger Anlagentyp mit Ausnahme des ersten Anlagentyps ist.

3. Erfassungssystem nach Anspruch 1, wobei
die Erfassungssteuereinrichtung (120) konfiguriert ist, einen oder mehrere Drahtlossensorknoten (201) in Übereinstimmung damit zu wählen, bei welchem Anlagentyp sich die spezifizierte Position befindet, und für jeden des einen oder der mehreren gewählten Drahtlossensorknoten (201) eine Parameterwertgruppe zu bestimmen, die der spezifizierten Position entspricht.

4. Erfassungssystem nach Anspruch 3, wobei
der eine oder die mehreren Drahtlossensorknoten (201) einen Gassensorknoten (201C) enthalten, der ein Drahtlossensorknoten (201) ist, der einen Gassensor enthält, und
bei einer Position in einer Raumstrukturanlage, in die der Zug (130) einfährt oder aus der er ausfährt und die einen Raum bildet, der den Zug (130) umgibt, der eine oder die mehreren gewählten Drahtlossensorknoten (201) den Gassensorknoten (201C) enthalten.

5. Erfassungssystem nach Anspruch 3, wobei
der eine oder die mehreren Drahtlossensorknoten (201) einen Schallsensorknoten (201A) enthalten, der ein Drahtlossensorknoten (201) ist, der einen Schallsensor enthält, und
bei einer Position an einer Brücke, die als eine Anlage dient, der eine oder die mehreren gewählten Drahtlossensorknoten (201) den Schallsensorknoten (201A) enthalten.

6. Erfassungssystem nach Anspruch 1, wobei
die Erfassungssteuereinrichtung (120) konfiguriert ist, die Position des Zugs (130) auf der Grundlage von Betriebsmanagementinformationen zu spezifizieren, die Informationen enthalten, die eine Beziehung zwischen einem Zeitraum und der Position des Zugs (130) angeben.

7. Erfassungssystem nach Anspruch 6, wobei
dann, wenn eine Verspätung des Zugs (130) auftritt, die Verspätungszeit des Zugs (130) in einem Zeitraum, der durch die Betriebsmanagementinformationen angegeben wird, reflektiert wird.

8. Erfassungssystem nach Anspruch 6, wobei
die Erfassungssteuereinrichtung (120) konfiguriert ist, einen Messungsdatensatz von jedem des einen oder der mehreren Drahtlossensorknoten (201) zu sammeln,
die Erfassungssteuereinrichtung (120) konfiguriert ist, eine Lernverarbeitung des Lernens einer Beziehung zwischen der Position des Zugs (130) und einer optimalen Parameterwertgruppe (507) für jeden des einen oder der mehreren Drahtlossensorknoten (201) durchzuführen,
die Lernverarbeitung für jeden des einen oder der mehreren Drahtlossensorknoten (201) ein Bestimmen für jede einer oder mehrerer spezifizierter Positionen des Zugs (130) einer optimalen Parameterwertgruppe (507) bei der entsprechenden Position durch Analysieren einer oder mehrerer Messungsdatensatzgruppen eines oder mehrerer Drahtlossensorknoten (201), die den entsprechenden Drahtlossensorknoten (201) enthalten, auf der Grundlage der Betriebsmanagementinformationen (363) enthält, und
für jeden des einen oder der mehreren Drahtlossensorknoten (201)
der Messungsdatensatz ein Datensatz ist, der einen oder mehrere Werte, die gemäß der Parameterwertgruppe, die im entsprechenden Drahtlossensorknoten (201) gesetzt ist, gemessen wurden, und einen Messungszeitpunkt jedes des einen oder der mehreren Werte angibt, und
für jede Parameterwertgruppe, die im entsprechenden Drahtlossensorknoten (201) gesetzt ist, die Messungsdatensatzgruppe ein oder mehrere Messungsdatensätze ist, die der Parameterwertgruppe entsprechen.

9. Erfassungssystem nach Anspruch 8, wobei
das Spezifizieren einer Position des Zugs (130) ausgelegt ist, zu spezifizieren, bei welchem Anlagentyp unter einem oder mehreren Anlagentypen der Zug (130) positioniert ist.

10. Erfassungssystem nach Anspruch 9, wobei
der eine oder die mehreren Drahtlossensorknoten (201) einen Gassensorknoten (201C) enthalten, der ein Drahtlossensorknoten (201) ist, der einen Gassensor enthält, und
die Erfassungssteuereinrichtung (120) konfiguriert ist, für den Gassensorknoten (201C) eine optimale Parameterwertgruppe bei einer Position in einer Raumstrukturanlage, in die der Zug (130) einfährt oder aus der er ausfährt und die einen Raum bildet, der den Zug (130) umgibt, zu bestimmen.

11. Erfassungssystem nach Anspruch 10, wobei
der Gassensorknoten (201C) ein Drahtlossensorknoten (201) ist, der ein unabhängiges Stromversorgungssystem (301) enthält, das eine Solarzelle aufweist, und
die Erfassungssteuereinrichtung (120) konfiguriert ist zum
Einschalten einer Stromversorgung des Gassensorknotens (201C), wenn die Position des Zugs (130) sich von einer Position außer der Raumstrukturanlage zu einer Position in der Raumstrukturanlage ändert, und
Ausschalten der Stromversorgung des Gassensorknotens (201C), wenn die Position des Zugs (130) sich von einer Position in der Raumstrukturanlage zu einer Position außer der Raumstrukturanlage ändert.

12. Erfassungssystem nach Anspruch 10, wobei
für jeden mindestens einen Drahtlossensorknoten (201) unter dem einen oder den mehreren Drahtlossensorknoten (201), der eine Messung ungeachtet davon durchführt, ob die Position des Zugs (130) eine Position in der Raumstrukturanlage oder einer Position außer der Raumstrukturanlage ist, ein optimaler Probenentnahmezeitraum bei der Position in der Raumstrukturanlage größer als ein optimaler Probenentnahmezeitraum bei der Position außer der Raumstrukturanlage ist.

13. Erfassungssystem nach Anspruch 1, wobei
die Erfassungssteuereinrichtung (120) konfiguriert ist, eine Geschwindigkeit des Zugs (130) zusätzlich zur Position des Zugs (130) zu spezifizieren und für den mindestens einen Drahtlossensorknoten (201) eine Parameterwertgruppe des Drahtlossensorknotens (201), der der spezifizierten Position und Geschwindigkeit des Zugs entspricht, zu bestimmen.

14. Erfassungssteuerungsverfahren, das Folgendes umfasst:
Spezifizieren einer Position eines Zugs (130);
Bestimmen, für mindestens einen Drahtlossensorknoten (201) unter einem oder mehreren Drahtlossensorknoten (201), die am Zug (130) installierbar sind, einer Parameterwertgruppe des Drahtlossensorknotens (201), der der spezifizierten Position entspricht, wobei jeder Drahtlossensorknoten (201) einen Sensor (301), eine Messungsschaltung (303) und ein unabhängiges Stromversorgungssystem (302) enthält und konfiguriert ist, Messungen auf der Grundlage einer Parameterwertgruppe durchzuführen, die einer oder mehrere Parameterwerte ist, die Einstellungswerte der Messungsschaltung (303) des mindestens einen Drahtlossensorknotens (201) enthalten, und
Durchführen einer Steuerung, um die bestimmte Parameterwertgruppe im Drahtlossensorknoten (507) zu setzen.

## Revendications

1. Système de détection comprenant :
un ou plusieurs noeuds de capteurs sans fil (201) pouvant être installés sur un train (130), chaque noeud de capteur sans fil (201) incluant un capteur (301), un circuit de mesurage (303) et un système d'alimentation de puissance indépendant (302), et étant configuré pour effectuer des mesurages sur la base d'un groupe de valeurs de paramètres qui est une ou plusieurs valeurs de paramètres incluant des valeurs de réglage du circuit de mesurage (303) desdits un ou plusieurs noeuds de capteurs sans fil (201) ; et
un dispositif de commande de détection (120) configuré pour spécifier une position sur le train (130), pour déterminer, pour au moins un noeud de capteur sans fil (201) parmi lesdits un ou plusieurs noeuds de capteurs sans fil (201), un groupe de valeurs de paramètres (507) d'un noeud de capteur sans fil (201) correspondant à la position spécifiée, et pour effectuer une commande pour fixer le groupe de valeurs de paramètres déterminé dans le noeud de capteur sans fil (201).

2. Système de détection selon la revendication 1, dans lequel
la spécification de la position du train (130) consiste à spécifier dans quel type d'installation parmi un ou plusieurs types d'installation le train (130) est positionné,
quand la position du train (130) change depuis une première position qui est une position dans un premier type d'installation pour une seconde position qui est une position dans un second type d'installation, le dispositif de commande de détection (120) est configuré pour effectuer une commande, pour chacun desdits au moins un noeud de capteur sans fil (201) parmi lesdits un ou plusieurs noeuds de capteur sans fil (201), pour changer un groupe de valeurs de paramètres d'un noeud de capteur sans fil (201) en un groupe de valeurs de paramètres correspondant à la seconde position,
le premier type d'installation est un type quelconque d'installation, et
le second type d'installation est un type quelconque d'installation autre que le premier type d'installation.

3. Système de détection selon la revendication 1, dans lequel
le dispositif de commande de détection (120) est configuré pour sélectionner un ou plusieurs noeuds de capteurs sans fil (201) en accord avec le type d'installation dans lequel se trouve la position spécifiée, et pour déterminer, pour chacun desdits un ou plusieurs noeuds de capteurs sans fil (201) sélectionnés, un groupe de valeurs de paramètres correspondant à la position spécifiée.

4. Système de détection selon la revendication 3, dans lequel
lesdits un ou plusieurs noeuds de capteurs sans fil (201) incluent un noeud de capteur de gaz (201C) qui est un noeud de capteur sans fil (201) incluant un capteur de gaz, et
à une position dans une installation de structure d'espace dans laquelle le train (130) entre ou sort et qui forme un espace entourant le train (130), lesdits un ou plusieurs noeuds de capteurs sans fil (201) sélectionnés incluent le noeud de capteur de gaz (201C).

5. Système de détection selon la revendication 3, dans lequel
lesdits un ou plusieurs noeuds de capteurs sans fil (201) incluent un noeud de capteur de son (201A) qui est un noeud de capteur sans fil (201) incluant un capteur de son, et
à une position sur un pont servant d'installation, lesdits un ou plusieurs noeuds de capteurs sans fil (201) sélectionnés incluent le noeud de capteur de son (201A).

6. Système de détection selon la revendication 1, dans lequel
le système de commande de détection (120) est configuré pour spécifier la position du train (130) sur la base d'informations de gestion de fonctionnement incluant des informations indiquant une relation entre une période temporelle et la position du train (130).

7. Système de détection selon la revendication 6, dans lequel
quand un retard du train (130) se produit, un temps de retard du train (130) est réfléchi dans une période temporelle indiquée par les informations de gestion de fonctionnement.

8. Système de détection selon la revendication 6, dans lequel
le dispositif de commande de détection (120) est configuré pour collecter des ensembles de données de mesurage à partir de chacun desdits un ou plusieurs noeuds de capteurs sans fil (201),
le dispositif de commande de détection (120) est configuré pour effectuer un traitement d'apprentissage consistant à apprendre une relation entre la position du train (130) et un groupe de valeurs de paramètres (507) optimal pour chacun desdits un ou plusieurs noeuds de capteurs sans fil (201),
pour chacun desdits un ou plusieurs noeuds de capteurs sans fil (201), le traitement d'apprentissage inclut de déterminer, pour chacune desdites une ou plusieurs positions spécifiées du train (130), un groupe de valeurs de paramètres (507) optimal à la position correspondante en analysant un ou plusieurs groupes d'ensembles de données de mesurage desdits un ou plusieurs noeuds de capteurs sans fil (201) incluant le noeud de capteur sans fil (201) correspondant sur la base des informations de gestion de fonctionnement (363), et
pour chacun desdits un ou plusieurs noeuds de capteurs sans fil (201),
l'ensemble de données de mesurage est un ensemble de données indiquant une ou plusieurs valeurs mesurées en accord avec le groupe de valeurs de paramètres fixé dans ledit noeud de capteur sans fil (201) correspondant et un instant de mesurage de chacune desdites une ou plusieurs valeurs, et
pour chaque groupe de valeurs de paramètres fixé dans le noeud de capteur sans fil (201) correspondant, le groupe d'ensembles de données de mesurage est un ou plusieurs ensembles de données de mesurage correspondant au groupe de valeurs de paramètres.

9. Système de détection selon la revendication 8, dans lequel
la spécification d'une position du train (130) consiste à spécifier dans quel type d'installation parmi un ou plusieurs types d'installation le train (130) est positionné.

10. Système de détection selon la revendication 9, dans lequel
lesdits un ou plusieurs noeuds de capteurs sans fil (201) incluent un noeud de capteur de gaz (201C) qui est un noeud de capteur sans fil (201) incluant un capteur de gaz, et
le dispositif de commande de détection (120) est configuré pour déterminer, pour le noeud de capteur de gaz (201C), un groupe de valeurs de paramètres optimal à une position dans une installation de structure d'espace dans laquelle le train (130) entre ou sort et qui forme un espace entourant le train (130).

11. Système de détection selon la revendication 10, dans lequel
le noeud de capteur de gaz (201C) est un noeud de capteur sans fil (201) incluant un système d'alimentation de puissance indépendant (301) ayant une cellule solaire, et
le dispositif de commande de détection (120) est configuré pour
activer une alimentation de puissance du noeud de capteur de gaz (201C) quand la position du train (130) change depuis une position autre que l'installation de structure d'espace pour une position dans l'installation de structure d'espace, et
désactiver l'alimentation de puissance du noeud de capteur de gaz (201C) quand la position du train (130) change depuis une position dans l'installation de structure d'espace pour une position autre que l'installation de structure d'espace.

12. Système de détection selon la revendication 10, dans lequel
pour chacun desdits au moins un noeud de capteur sans fil (201), parmi lesdits un ou plusieurs noeuds de capteurs sans fil (201), qui effectue un mesurage indépendamment du fait de savoir si la position du train (130) est une position dans l'installation de structure d'espace ou une position autre que l'installation de structure d'espace, une période d'échantillonnage optimale à la position dans l'installation de structure d'espace est plus longue qu'une période d'échantillonnage optimale à la position autre que l'installation de structure d'espace.

13. Système de détection selon la revendication 1, dans lequel
le dispositif de commande de détection (120) est configuré pour spécifier une vitesse du train (130) en addition à la position du train (130), et pour déterminer, pour ledit au moins un noeud de capteur sans fil (201), un groupe de valeurs de paramètres du noeud de capteur sans fil (201) correspondant à la position et à la vitesse du train spécifiées.

14. Procédé de commande de détection comprenant les étapes consistant à :
spécifier une position d'un train (130) ;
déterminer, pour au moins un noeud de capteur sans fil (201) parmi un ou plusieurs noeuds de capteurs sans fil (201) pouvant être installés sur un train (130), chaque noeud de capteur sans fil (201) incluant un capteur (301), un circuit de mesurage (303) et un système d'alimentation de puissance indépendant (302), et étant configuré pour effectuer des mesurages sur la base d'un groupe de valeurs de paramètres qui est une ou plusieurs valeurs de paramètres incluant des valeurs de réglage du circuit de mesurage (303) desdits au moins un noeud de capteur sans fil (201), un groupe de valeurs de paramètres du noeud de capteur sans fil (201) correspondant à la position spécifiée, et
effectuer une commande pour fixer le groupe de valeurs de paramètres déterminé dans le noeud de capteur sans fil (507).
